# FASCICULE DE BREVET EUROPEEN

(11) **EP 2 851 246 B1**
(45) Date de publication et mention de la délivrance du brevet: **05.10.2016**
(21) Numéro de dépôt: 14184477.9
(22) Date de dépôt: 11.09.2014
(51) Int. Cl.: B60S 1/34, B60S 1/08, B60S 1/04

(54) **Procédé de détection de la position d'un porte-balai pour un système d'essuyage d'une vitre de véhicule**
Verfahren zur Erfassung der Position eines Wischarms einer Scheibenwischervorrichtung
Method for detecting the position of a wiper arm for a vehicle window wiping system

(30) Priorité: 24.09.2013 FR 1359166
(43) Date de publication de la demande: 25.03.2015
(73) Titulaire: Valeo Systèmes d'Essuyage, 78321 Le Mesnil Saint Denis (FR)
(72) Inventeur: Adeline, Romain, 78000 VERSAILLES (FR); Koniec, Aymeric, 91380 CHILLY-MAZARIN (FR)
(74) Mandataire: Callu Danseux, Violaine

(56) Documents cités:
- US-A- 5 079 793
- US-A1- 2010 037 416
- US-A1- 2013 185 888

## Description

### DOMAINE TECHNIQUE

La présente invention concerne un procédé de détection de la position d'un porte-balai pour un système d'essuyage d'une vitre de véhicule.

### ETAT DE L'ART

Un système d'essuyage de pare-brise de véhicule comprend notamment au moins un balai d'essuyage porté par un porte-balai et un moteur d'entraînement du porte-balai de façon à ce que le balai soit entraîné par le porte-balai en essuyage du pare-brise, dans un mouvement de rotation cyclique, sensiblement en portion de cercle, autour d'un axe de rotation.

Le porte-balai comprend une extrémité articulée sur une partie du véhicule et est déplaçable, en général manuellement, depuis une position dite de service dans laquelle le balai qu'il porte est en contact avec le pare-brise et est apte à être entraîné par le porte-balai pour essuyer le pare-brise, et une position dite de maintenance dans laquelle le balai n'est pas en contact avec le pare-brise. Le porte-balai peut être mis dans la position de maintenance par exemple pour nettoyer le balai, le remplacer en cas d'usure ou le protéger du givre formé sur le pare-brise en hiver.

On a constaté que si le porte-balai est entraîné par le moteur lorsqu'il est dans sa position de maintenance, le porte-balai ou le balai qu'il porte peut venir percuter une partie du véhicule, telle que son capot, ce qui peut entraîner une dégradation du véhicule et une destruction du système d'essuyage.

Ce problème concerne particulièrement le type de système d'essuyage pour lequel le porte-balai est dans une position de rangement, par exemple sous le capot du véhicule, lorsque le système est inactif. Le porte-balai n'est pas accessible dans cette position de rangement et ne peut pas être amené directement depuis cette position à une position de maintenance. Une commande spécifique du système, depuis l'habitacle du véhicule, permet de déplacer le porte-balai de sa position de rangement à une position intermédiaire dans laquelle il est accessible et le balai qu'il porte est en appui sur le pare-brise. Le porte-balai peut alors être déplacé manuellement depuis cette position intermédiaire jusqu'à une position de maintenance dans laquelle le balai n'est plus en contact avec le pare-brise.

L'invention propose une solution simple, efficace et économique au problème précité.

US-A-5 079 793 montre le préambule des revendications 1 et 15.

### EXPOSE DE L'INVENTION

L'invention propose à cet effet un procédé de détection de la position d'un porte-balai pour un système d'essuyage d'une vitre de véhicule, ce système comportant :
- au moins un balai d'essuyage porté par ledit porte-balai déplaçable depuis une position dite de maintenance dans laquelle ledit balai d'essuyage n'est pas en contact avec ladite vitre, à une position dite de service dans laquelle ledit balai d'essuyage est en contact avec ladite vitre,
- au moins un moteur d'entraînement dudit porte-balai, et
- au moins une unité de contrôle pour la commande dudit moteur,
ledit procédé comprenant les étapes consistant à :
a) mesurer où estimer au moins un paramètre pour la détermination de la position de maintenance ou de service,
b) comparer la valeur mesurée ou estimée dudit paramètre avec une valeur de référence ou une plage de valeurs de référence, et
c) déterminer, à partir des résultats de la comparaison, si ledit porte-balai est en position de maintenance ou de service.

De préférence, ledit paramètre est choisi parmi la consommation électrique dudit moteur, le couple de sortie dudit moteur, le couple de frottement dudit balai d'essuyage sur ladite vitre et le coefficient de friction dudit balai d'essuyage sur ladite vitre.

Lorsque le porte-balai est dans sa position de service et qu'il est entraîné par le moteur, une friction apparaît entre la vitre et le balai qui glisse sur la vitre, cette friction étant caractérisée par un coefficient de friction. Cette friction entraîne un couple de friction qui s'oppose au couple de sortie du moteur. Plus la friction est importante et plus le couple de sortie du moteur doit être important pour entraîner le porte-balai à une vitesse donnée. De plus, plus le couple de sortie du moteur est important et plus la consommation électrique du moteur est importante. A contrario, lorsque la friction est nulle, parce que le balai n'est pas en contact avec la vitre du véhicule, le couple de sortie du moteur et la consommation en courant du moteur sont relativement faibles lorsque le système est actif.

L'invention propose ainsi un procédé permettant de déterminer si un balai d'essuyage est ou non en contact avec une vitre d'un véhicule, le balai étant en contact avec la vitre lorsque le porte-balai est en position dite de service (ou intermédiaire) et n'est pas en contact avec la vitre lorsque le porte-balai est en position dite de maintenance. Selon l'invention, au moins un paramètre est étudié, l'étude de ce paramètre revenant à étudier l'effort nécessaire au système d'essuyage pour déplacer le balai. La comparaison de la valeur mesurée ou estimée à la valeur ou plage de valeurs de référence permet de déterminer facilement si le porte-balai est ou non dans sa position de maintenance. La gestion du résultat de cette comparaison peut permettre d'alerter le conducteur dans l'habitacle, d'interrompre ou de bloquer l'actionnement du moteur. Le paramètre étudié est avantageusement estimé (et non pas calculé) pour éviter d'équiper le système d'un capteur de mesure de ce paramètre.

Les étapes a) à c) du procédé peuvent suivre la réception par l'unité de contrôle d'un ordre d'entraînement dudit porte-balai, émis par exemple depuis l'habitacle du véhicule. Ainsi, à chaque cycle de démarrage, le système peut vérifier la position du porte-balai pour éviter le risque de destruction du système.

Les étapes a) à c) du procédé sont de préférence réalisées à un instant t. L'estimation du paramètre n'est alors pas réalisée pendant un laps de temps mais est au contraire réalisée de manière instantanée.

Les étapes a) à c) peuvent précéder ou suivre directement une étape de démarrage de l'entraînement dudit porte-balai, de préférence suivre directement une étape de démarrage de l'entraînement du porte-balai.

Le procédé peut comprendre :
- une étape d) supplémentaire de détection d'un déplacement dudit porte-balai, et/ou
- une étape e) supplémentaire de blocage ou d'interruption d'un déplacement dudit porte-balai.

Dans le cas où les étapes a) à c) du procédé sont réalisées avant l'entraînement du porte-balai, cet entraînement peut être bloqué/empêché (étape e)) si le résultat à l'étape c) indique que le porte-balai est dans sa position de maintenance. Dans le cas où les étapes a) à c) sont réalisées après un début d'entraînement du porte-balai (qui serait détecté par l'étape d)), cet entraînement peut être interrompu (étape e)) si le résultat à l'étape c) indique que le porte-balai est dans sa position de maintenance.

Avantageusement, le paramètre est estimé et comparé par l'unité de contrôle du système d'essuyage.

Selon un mode particulier de réalisation de l'invention, le paramètre choisi est le coefficient de friction dudit balai d'essuyage sur ladite vitre. L'étape de comparaison du procédé consiste donc à comparer une valeur estimée du coefficient de friction à une valeur ou une plage de valeurs de référence.

Dans le cas où la valeur mesurée est comparée à une valeur de référence, cette dernière peut être égale à zéro. Lorsque la valeur estimée du coefficient de friction est égale ou proche de zéro, l'unité de contrôle peut en déduire que le porte-balai est dans sa position de maintenance et donc que le balai n'est pas en contact avec la vitre.

Dans le cas où la valeur mesurée est comparée à une plage de valeurs de référence, cette dernière peut s'étendre de zéro à une valeur seuil, qui est la valeur minimale du coefficient de friction dudit balai d'essuyage sur ladite vitre, en particulier lorsque ladite vitre est mouillée. Cette valeur seuil peut être déterminée de manière empirique. Alternativement, la valeur seuil peut être déterminée par simulation ou par tribologie.

Une valeur du coefficient de friction peut être estimée à partir d'une valeur estimée du couple de sortie du moteur, qui peut elle-même être estimée à partir d'une valeur estimée de la consommation électrique du moteur. Toutes ces estimations peuvent être réalisées par l'unité de contrôle du système d'essuyage. Les estimations des valeurs sont de préférence des estimations instantanées, c'est-à-dire réalisées à un instant t.

La présente invention concerne également un système d'essuyage d'une vitre de véhicule, comportant :
- au moins un balai d'essuyage porté par ledit porte-balai déplaçable depuis une position dite de maintenance dans laquelle ledit balai d'essuyage n'est pas en contact avec ladite vitre, à une position dite de service dans laquelle ledit balai d'essuyage est en contact avec ladite vitre,
- au moins un moteur d'entraînement dudit porte-balai, et
- au moins une unité de contrôle pour la commande dudit moteur,
ledit système comprenant un dispositif apte à :
a) mesurer ou estimer au moins un paramètre pour la détermination de la position de maintenance ou de service,
b) comparer la valeur mesurée ou estimée dudit paramètre avec une valeur de référence ou une plage de valeurs de référence, et
c) déterminer, à partir des résultats de la comparaison, si le porte-balai est en position de maintenance ou de service.

La présente invention concerne aussi un système d'essuyage tel que défini ci-dessus, dans lequel ladite unité de contrôle pour la commande du moteur comprend ledit dispositif apte à réaliser les étapes a) à c) mentionnées ci-dessus.

L'invention concerne également un système d'essuyage selon l'une quelconque des définitions ci-dessus, dans lequel ledit dispositif est apte à mettre en oeuvre le procédé de détection de la position d'un porte-balai selon l'une quelconque des variantes définies ci-dessus.

L'invention concerne encore un véhicule, en particulier automobile, caractérisé en ce qu'il comprend au moins un système d'essuyage selon l'une quelconque des variantes définies ci-dessus.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une vue très schématique d'un système d'essuyage d'une vitre de véhicule, les porte-balais de ce système étant représentés dans leur position de service,
- la figure 2 est une autre vue très schématique du système d'essuyage de la figure 1, les porte-balais étant représentés dans leur position de maintenance,
- la figure 3 est une vue très schématique d'un organigramme représentant des étapes d'estimation de paramètres pour la mise en oeuvre du procédé selon l'invention de détermination de la position d'au moins un porte-balai, et
- la figure 4 est une vue très schématique d'un autre organigramme représentant des étapes du procédé selon l'invention.

### DESCRIPTION DETAILLEE

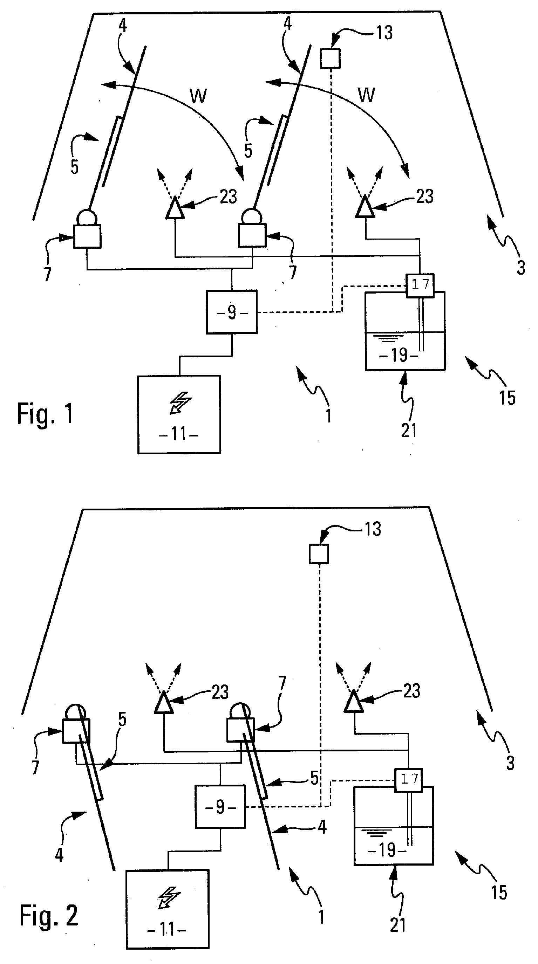

On se réfère d'abord aux figures 1 et 2 qui représentent un même système d'essuyage 1 d'une vitre 3 de véhicule, en particulier d'un pare-brise d'une automobile, ce système comportant ici deux balais 4 d'essuyage de la vitre 3, qui sont chacun portés par un porte-balai 5.

Chaque porte-balai 5 a une extrémité reliée à un moteur 7 qui est destiné à entraîner le porte-balai 5 en essuyage de la vitre 3, dans un mouvement de rotation cyclique, sensiblement en portion de cercle, autour d'un axe de rotation.

Plus précisément, chaque moteur 7 comprend un arbre de sortie qui transmet un couple d'entraînement au porte-balai 5, par exemple par l'intermédiaire d'une tringlerie.

Les moteurs 7 sont électriques et sont reliés à une source électrique 11, telle que la batterie du véhicule ou un alternateur, par l'intermédiaire d'une unité de contrôle 9 du système 1. Cette unité 9 est configurée pour gérer le fonctionnement du système 1 selon plusieurs programmes prédéfinis, par exemple en contrôlant la vitesse W de rotation des porte-balais 5 à partir de la régulation du courant délivré aux moteurs 7, pour une valeur de tension donnée.

Le système d'essuyage 1 comprend ici un capteur de pluie 13 relié à l'unité de contrôle 9. Il comprend également un dispositif de nettoyage 15 de la vitre 3, qui comporte une pompe 17 reliée à l'unité 9 et configurée pour prélever du liquide lave-glace 19 d'un récipient 21 et l'acheminer jusqu'à des moyens de projection de liquide sur la vitre 3, ces moyens de projection étant par exemple des buses 23 montées sur le capot du véhicule.

Les porte-balais 5 sont représentés dans leur position de service en figure 1 et dans leur position de maintenance en figure 2. Dans leur position de service, les porte-balais 5 sont rabattus vers la vitre 3 et les balais 4 sont en contact avec la vitre 3. Dans cette position, les porte-balais 5 peuvent être déplacés par actionnement des moteurs 7, pour que les balais 4 essuient la vitre 3.

Dans leur position de maintenance représentée en figure 2, les porte-balais 5 sont écartés de la vitre 3 et les balais 4 sont éloignés de la vitre et ne sont donc pas en contact avec cette dernière. Dans cette position, les balais 4 peuvent être nettoyés ou démontés des porte-balais 5 afin de les remplacer par des neufs.

La présente invention propose notamment un procédé pour détecter si les porte-balais 5 sont dans leur position de service ou dans leur position de maintenance, afin de limiter les risques de dégradation du système 1, en particulier lors de son activation.

Comme cela est décrit plus haut, l'unité 9 contrôle notamment la vitesse W d'entraînement des porte-balais 5 à partir du contrôle du courant électrique d'alimentation des moteurs 7, pour une valeur de tension donnée.

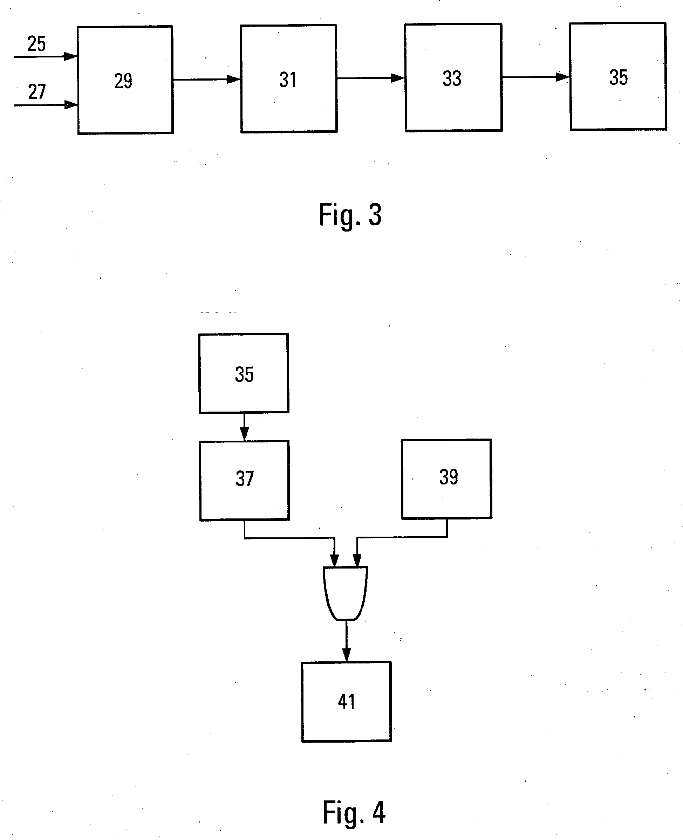

Selon l'invention, l'unité 9 est en outre configurée pour prédire, à partir notamment d'une valeur de tension donnée (référence 25 en figure 3) et de la position du porte-balai 5 sur la vitre 3 (référence 27), quelle doit être théoriquement la vitesse W d'entraînement du porte-balai 5 (étape référencée 29).

L'unité de contrôle 9 est de plus configurée pour estimer :
- à partir de cette vitesse W d'entraînement du porte-balai, le courant consommé par le moteur 7 pour assurer l'entraînement du porte-balai à cette vitesse (étape référencée 31),
- à partir de l'estimation du courant consommé par le moteur 7, le couple de sortie du moteur 7 (étape référencée 33), et
- à partir de l'estimation du couple de sortie du moteur 7, le coefficient de friction du balai 4 sur la vitre (étape référencée 35).

Selon un mode particulier de réalisation de l'invention représenté schématiquement en figure 4, le procédé comprend les étapes suivantes :
a) estimer le coefficient de friction des balais 4 sur la vitre 3 (étape 35 précitée),
b) comparer la valeur estimée du coefficient de friction à une valeur de référence ou à une plage de valeurs de référence (étape 37), et
c) déterminer si le porte-balai est dans sa position de maintenance ou dans sa position de service, à partir des résultats de la comparaison.

Comme expliqué dans ce qui précède, l'estimation du coefficient de friction est réalisée par l'unité 9. La comparaison de valeurs du coefficient de friction et l'interprétation du résultat sont également réalisées par l'unité 9.

Dans le cas présent, la valeur estimée du coefficient de friction peut être comparée par l'unité 9 à une valeur de référence, par exemple zéro. Un coefficient de friction nul signifie que le déplacement du porte-balai 5 ne génère aucune friction entre le balai 4 et la vitre 3 et donc que le porte-balai 5 est dans sa position de maintenance. Ceci n'est possible que si le balai n'est pas au contact de la vitre. Dans le cas où la valeur estimée du coefficient de friction est égale à zéro, ou dans le cas où l'unité de contrôle ne parvient pas à mesurer ou estimer le coefficient de friction dudit balai sur ladite vitre (par exemple selon la méthode d'estimation de la figure 3 telle que présentée ci-dessus), l'unité de contrôle considère que le balai 4 n'est pas au contact de la vitre 3 et que le porte-balai 5 qui porte ce balai 4 est dans une position de maintenance.

En variante, la valeur estimée du coefficient de friction peut être comparée par l'unité 9 à une plage de valeurs de référence, s'étendant par exemple de zéro à une valeur seuil, comme décrit dans ce qui précède. La valeur seuil peut être légèrement supérieure à zéro.

Les étapes du procédé peuvent être mises en oeuvre par l'unité de contrôle 9 dès que celle-ci reçoit un ordre d'activation de l'entraînement des porte-balai 5, depuis l'habitacle du véhicule. A réception de cet ordre, l'unité 9 peut réaliser, en parallèle des étapes a) à c), une étape 39 de détection du déplacement des porte-balais 5. Dans le cas où la valeur estimée du coefficient de friction est égale à zéro et qu'un déplacement des porte-balais 5 est détecté, l'unité 9 peut interrompre ce déplacement afin de ne pas dégrader le système (étape 41).

En variante, l'unité 9 peut être conçue pour bloquer ou empêcher tout déplacement des porte-balais 5, à partir du moment où la valeur estimée du coefficient de friction est égale à zéro, et sans pour autant qu'un déplacement des porte-balais n'ait été détecté.

L'unité 9 peut effectuer les étapes du procédé pour l'un des porte-balais ou les deux. Il est envisageable que l'un des porte-balais soit en position de service alors que l'autre porte-balai soit en position de maintenance. L'unité de contrôle 9 est alors apte à identifier lequel des porte-balais est dans sa position de maintenance et à bloquer l'entraînement de ce porte-balai. L'entraînement de l'autre porte-balai peut alors être maintenu activé ou être interrompu.

Dans des variantes du procédé selon l'invention, le paramètre étudié par l'unité de contrôle pourrait être le couple de sortie du moteur ou la consommation en courant du moteur, ce paramètre pouvant être estimé comme décrit dans ce qui précède.

## Revendications

1. Procédé de détection de la position d'un porte-balai (5) pour un système (1) d'essuyage d'une vitre (3) de véhicule, ce système comportant :
- au moins un balai d'essuyage (4) porté par ledit porte-balai (5) déplaçable depuis une position dite de maintenance dans laquelle ledit balai d'essuyage (4) n'est pas en contact avec ladite vitre (3), à une position dite de service dans laquelle ledit balai d'essuyage (4) est en contact avec ladite vitre (3),
- au moins un moteur (7) d'entraînement dudit porte-balai (5), et
- au moins une unité de contrôle (9) pour la commande dudit moteur (7),
**caractérisé en ce que** ledit procédé comprend les étapes consistant à :
a) mesurer ou estimer (35) au moins un paramètre pour la détermination de la position de maintenance ou de service,
b) comparer (37) la valeur mesurée ou estimée dudit paramètre avec une valeur de référence ou une plage de valeurs de référence, et
c) déterminer, à partir des résultats de la comparaison, si ledit porte-balai (5) est en position de maintenance ou de service.

2. Procédé selon la revendication 1, dans lequel ledit paramètre est choisi parmi la consommation électrique dudit moteur (7), le couple de sortie dudit moteur (7), le couple de frottement dudit balai d'essuyage (4) sur ladite vitre (3) et le coefficient de friction dudit balai d'essuyage (4) sur ladite vitre (3).

3. Procédé selon la revendication 1 ou 2, dans lequel les étapes a) à c) suivent la réception par l'unité de contrôle (9) d'un ordre d'entraînement dudit porte-balai (5).

4. Procédé selon la revendication 3, dans lequel les étapes a) à c) précèdent ou suivent directement une étape de démarrage de l'entraînement dudit porte-balai (5), de préférence suivent directement une étape de démarrage de l'entraînement dudit porte-balai (5).

5. Procédé selon l'une des revendications précédentes, comprenant une étape (39) supplémentaire de détection d'un déplacement dudit porte-balai (5).

6. Procédé selon l'une des revendications précédentes, comprenant une étape (41) supplémentaire de blocage ou d'interruption d'un déplacement dudit porte-balai (5).

7. Procédé selon l'une des revendications précédentes, dans lequel ledit paramètre est estimé et comparé par l'unité de contrôle (9).

8. Procédé selon l'une des revendications précédentes, dans lequel le paramètre choisi est le coefficient de friction dudit balai d'essuyage (4) sur ladite vitre (3).

9. Procédé selon la revendication 8, dans lequel ladite valeur de référence est zéro.

10. Procédé selon la revendication 8, dans lequel la plage de valeurs de référence s'étend de zéro à une valeur seuil, qui est la valeur minimale du coefficient de friction dudit balai d'essuyage (4) sur ladite vitre (3), en particulier lorsque ladite vitre (3) est mouillée.

11. Procédé selon la revendication 10, dans lequel la valeur seuil est déterminée de manière empirique.

12. Procédé selon l'une des revendications 8 à 11, dans lequel une valeur dudit coefficient de friction est estimée à partir d'une valeur estimée du couple de sortie dudit moteur (7).

13. Procédé selon la revendication 12, dans lequel ladite valeur du couple de sortie du moteur (7) est estimée à partir d'une valeur estimée de la consommation électrique dudit moteur (7).

14. Procédé selon la revendication 12 ou 13, dans lequel les estimations des valeurs sont des estimations instantanées.

15. Système (1) d'essuyage d'une vitre (3) de véhicule, comportant :
- au moins un balai d'essuyage (4) porté par ledit porte-balai (5) déplaçable depuis une position dite de maintenance dans laquelle ledit balai d'essuyage (4) n'est pas en contact avec ladite vitre (3), à une position dite de service dans laquelle ledit balai d'essuyage (4) est en contact avec ladite vitre (3),
- au moins un moteur (7) d'entraînement dudit porte-balai (5), et
- au moins une unité de contrôle (9) pour la commande dudit moteur (7),
**caractérisé en ce que** ledit système (1) comprend un dispositif apte à :
a) mesurer ou estimer (35) au moins un paramètre pour la détermination de la position de maintenance ou de service,
b) comparer (37) la valeur mesurée ou estimée dudit paramètre avec une valeur de référence ou une plage de valeurs de référence, et
c) déterminer, à partir des résultats de la comparaison, si le porte-balai (5) est en position de maintenance ou de service.

## Patentansprüche

1. Verfahren zur Erfassung der Position eines Wischarms (5) für ein Wischsystem (1) einer Fahrzeugscheibe (3), wobei dieses System umfasst:
- mindestens ein Wischblatt (4), das von dem Wischarm (5) getragen wird, der von einer sogenannten Wartungsposition, in der das Wischblatt (4) nicht mit der Scheibe (3) in Kontakt ist, in eine sogenannte Betriebsposition, in der das Wischblatt (4) mit der Scheibe (3) in Kontakt ist, verschiebbar ist,
- mindestens einen Antriebsmotor (7) des Wischarms (5), und
- mindestens eine Kontrolleinheit (9) zur Steuerung des Motors (7),
**dadurch gekennzeichnet, dass** das Verfahren die folgenden Schritte umfasst, darin bestehend:
a) mindestens einen Parameter zur Bestimmung der Wartungs- oder Betriebsposition zu messen oder zu schätzen (35),
b) den gemessenen oder geschätzten Wert des Parameters mit einem Referenzwert oder einem Bereich von Referenzwerten zu vergleichen (37), und
c) auf Basis der Resultate des Vergleichs zu bestimmen, ob sich der Wischarm (5) in Wartungs- oder Betriebsposition befindet.

2. Verfahren nach Anspruch 1, bei dem der Parameter unter dem elektrischen Verbrauch des Motors (7), dem Ausgangsdrehmoment des Motors (7), dem Reibmoment des Wischblattes (4) auf der Scheibe (3) und dem Reibbeiwert des Wischblattes (4) auf der Scheibe (3) ausgewählt ist.

3. Verfahren nach Anspruch 1 oder 2, bei dem die Schritte a) bis c) auf den Erhalt eines Antriebsbefehls des Wischarms (5) von der Kontrolleinheit (9) folgen.

4. Verfahren nach Anspruch 3, bei dem die Schritte a) bis c) direkt einem Schritt des Startens des Antriebs des Wischarms (5) vorhergehen oder folgen, vorzugsweise direkt einem Schritt des Startens des Antriebs des Wischarms (5) folgen.

5. Verfahren nach einem der vorhergehenden Ansprüche, umfassend einen zusätzlichen Schritt (39) der Erfassung einer Bewegung des Wischarms (5).

6. Verfahren nach einem der vorhergehenden Ansprüche, umfassend einen zusätzlichen Schritt (41) der Feststellung oder Unterbrechung einer Bewegung des Wischarms (5).

7. Verfahren nach einem der vorhergehenden Ansprüche, bei dem der Parameter von der Kontrolleinheit (9) geschätzt und verglichen wird.

8. Verfahren nach einem der vorhergehenden Ansprüche, bei dem der ausgewählte Parameter der Reibbeiwert des Wischblattes (4) auf der Scheibe (3) ist.

9. Verfahren nach Anspruch 8, bei dem der Referenzwert gleich Null ist.

10. Verfahren nach Anspruch 8, bei dem sich der Bereich von Referenzwerten von Null bis zu einem Schwellenwert erstreckt, der der Mindestwert des Reibbeiwerts des Wischblattes (4) auf der Scheibe (3) ist, insbesondere wenn die Scheibe (3) nass ist.

11. Verfahren nach Anspruch 10, bei dem der Schwellenwert empirisch bestimmt wird.

12. Verfahren nach einem der Ansprüche 8 bis 11, bei dem ein Wert des Reibbeiwerts auf Basis eines geschätzten Werts des Ausgangsdrehmoments des Motors (7) geschätzt wird.

13. Verfahren nach Anspruch 12, bei dem der Wert des Ausgangsdrehmoments des Motors (7) auf Basis eines geschätzten Werts des elektrischen Verbrauchs des Motors (7) geschätzt wird.

14. Verfahren nach Anspruch 12 oder 13, bei dem die Schätzungen der Werte momentane Schätzungen sind.

15. Wischsystem (1) einer Fahrzeugscheibe (3), umfassend:
- mindestens ein Wischblatt (4), das von dem Wischarm (5) getragen wird, der von einer sogenannten Wartungsposition, in der das Wischblatt (4) nicht mit der Scheibe (3) in Kontakt ist, in eine sogenannte Betriebsposition, in der das Wischblatt (4) mit der Scheibe (3) in Kontakt ist, verschiebbar ist,
- mindestens einen Antriebsmotor (7) des Wischarms (5), und
- mindestens eine Kontrolleinheit (9) zur Steuerung des Motors (7),
**dadurch gekennzeichnet, dass** das System (1) eine Vorrichtung umfasst, die geeignet ist:
a) mindestens einen Parameter zur Bestimmung der Wartungs- oder Betriebsposition zu messen oder zu schätzen (35),
b) den gemessenen oder geschätzten Wert des Parameters mit einem Referenzwert oder einem Bereich von Referenzwerten zu vergleichen (37), und
c) auf Basis der Resultate des Vergleichs zu bestimmen, ob sich der Wischarm (5) in Wartungs- oder Betriebsposition befindet.

## Claims

1. Method for detecting the position of a wiper arm (5) for a system (1) for wiping a vehicle window (3), this system comprising:
- at least one wiper blade (4) borne by said wiper arm (5) that can be displaced from a so-called maintenance position in which said wiper blade (4) is not in contact with said window (3), to a so-called service position in which said wiper blade (4) is in contact with said window (3),
- at least one motor (7) for driving said wiper arm (5), and
- at least one control unit (9) for controlling said motor (7),
**characterized in that** said method comprises the steps consisting in:
a) measuring or estimating (35) at least one parameter for determining the maintenance or service position,
b) comparing (37) the measured or estimated value of said parameter with a reference value or a range of reference values, and
c) determining, from the results of the comparison, whether said wiper arm (5) is in maintenance or service position.

2. Method according to Claim 1, in which said parameter is chosen from the electrical consumption of said motor (7), the output torque of said motor (7), the friction torque of said wiper blade (4) on said window (3) and the friction coefficient of said wiper blade (4) on said window (3).

3. Method according to Claim 1 or 2, in which the steps a) to c) follow the reception by the control unit (9) of a command to drive said wiper arm (5).

4. Method according to Claim 3, in which the steps a) to c) directly precede or follow a step of starting the driving of said wiper arm (5), preferably directly follow a step of starting the driving of said wiper arm (5).

5. Method according to one of the preceding claims, comprising an additional step (39) of detecting a displacement of said wiper arm (5).

6. Method according to one of the preceding claims, comprising an additional step (41) of immobilizing or interrupting a displacement of said wiper arm (5).

7. Method according to one of the preceding claims, in which said parameter is estimated and compared by the control unit (9).

8. Method according to one of the preceding claims, in which the selected parameter is the friction coefficient of said wiper blade (4) on said window (3).

9. Method according to Claim 8, in which said reference value is zero.

10. Method according to Claim 8, in which the range of reference values extends from zero to a threshold value, which is the minimum value of the friction coefficient of said wiper blade (4) on said window (3), in particular when said window (3) is wet.

11. Method according to Claim 10, in which the threshold value is determined empirically.

12. Method according to one of Claims 8 to 11, in which a value of said friction coefficient is estimated from an estimated value of the output torque of said motor (7).

13. Method according to Claim 12, in which said value of the output torque of the motor (7) is estimated from an estimated value of the electrical consumption of said motor (7).

14. Method according to Claim 12 or 13, in which the estimations of the values are instantaneous estimations.

15. System (1) for wiping a vehicle window (3), comprising:
- at least one wiper blade (4) borne by said wiper arm (5) that can be displaced from a so-called maintenance position in which said wiper blade (4) is not in contact with said window (3), to a so-called service position in which said wiper blade (4) is in contact with said window (3),
- at least one motor (7) for driving said wiper arm (5), and
- at least one control unit (9) for controlling said motor (7),
**characterized in that** said system (1) comprises a device suitable for:
a) measuring or estimating (35) at least one parameter for determining the maintenance or service position,
b) comparing (37) the measured or estimated value of said parameter with a reference value or a range of reference values, and
c) determining, from the results of the comparison, whether the wiper arm (5) is in maintenance or service position.
